# EUROPEAN PATENT APPLICATION

(11) **EP 4 838 886 A1**
(43) Date of publication of application: **11.11.2026**
(21) Application number: 25174404.1
(22) Date of filing: 06.05.2025
(51) Int. Cl.: H04N 19/30, H04N 19/597

(54) **ENCODING OF IMAGES FROM SEPARATE CAMERAS**

(71) Applicant: Axis AB, 223 69 Lund (SE)
(72) Inventor: Edpalm, Viktor, 223 69 Lund (SE); Yuan, Song, 223 69 Lund (SE)
(74) Representative: AWA Sweden AB

(57) **Abstract**

Provided is a computer-implemented method (400) for encoding of images captured by separate video cameras. The method includes receiving (S410) a respective image from each of two separate video cameras; determining (S440) that, according to at least one condition, a region of one of the images has an image texture similar to a region of the other image, and encoding (S460) the images as part of one or more encoded video streams, wherein encoding of the region of a first image of the images comprises using the region of the other, second image of the images as a reference. A corresponding video camera system, video camera, and computer programs and computer program products, are also provided.

## Description

### Technical field

The present disclosure generally relates to the field of video camera systems and encoding of video streams generated from images captured by such cameras. In particular, the present disclosure relates to a solution for how to encode images captured by separate video cameras, as part of generating one or more encoded video streams.

### Background

To cover a same scene from different angles, and/or to capture different parts of a same scene, contemporary video camera systems often include multiple video cameras arranged at different locations, or at least configured such that they have different field-of-views (FOVs). With many cameras, and in particular with many high-resolution cameras, encoding and transferring of video streams from the cameras may be challenging, as more strain is put on the computational hardware and higher bitrates are often needed as resolution increases.

### Summary

To at least partially overcome some of the above-identified challenges of contemporary technology, the present disclosure provides a method for encoding of images captured by separate video cameras, a method for encoding of an image captured by a video camera, a video camera system, a video camera, and corresponding computer programs and computer program products as defined in and by the accompanying independent claims. Embodiments of these entities are defined in and by the accompanying dependent claims.

According to a first aspect, there is provided a computer-implemented method for encoding images captured by separate video cameras, such as captured by two or more separate video cameras. The method includes receiving a respective image from each of the two separate video cameras. The method includes determining that, according to at least one condition, a region of one of the images has an image texture similar to a region of the other image. The method further includes encoding the images as part of one or more encoded video streams, wherein encoding of the region of a first image of the images includes using the region of the other, second image of the images as a reference (i.e., encoding the region of one image with reference to the region of the other image).

The envisaged solution improves upon contemporary technology in that it considers a system-wide perspective, wherein textural similarities between to images captured by separate cameras can be taken into account and used in order to improve encoding efficiency. This in contrast to conventional solutions, wherein the images from each camera are often encoded separately. It should be noted that for the envisaged solution to work, i.e. to provide at least some improvement in encoding efficiency (such as a reduced number of bits required to encode both images, and/or a reduced bitrate required to transfer both images as part of one or more encoded video streams), it is not required to have a perfect matching between regions and their respective image textures. Even a rather rough matching, in terms of e.g. image texture, can still be beneficial, as there may be at least some redundant information shared between the images due to the regions having at least somewhat similar image textures.

In one or more embodiments of the method, encoding the region of the first image using the region of the second image as a reference may be performed in response to determining that the two regions have similar image textures, e.g. by confirming that so is true before attempting to encode the region of the first image. In other embodiments, confirming the textural similarity of the regions may be performed only once, or e.g. only once in a while, and the region of the first image can be encoded with reference to the second image under the assumption that the regions are still texturally similar.

In one or more embodiments of the method, determining that the two regions have similar image textures may include performing image segmentation on each of the images, and the at least one condition may include that the image segmentation indicates that both regions belong to a same class. Image segmentation may be performed using conventional methods, such as those based on machine learning, and may determine that two regions have textural similarity under the assumption that e.g. objects of a same class, such as trees, roads, asphalt, grass, dirt, cobblestone, etc., are likely to be informationally redundant due to their textural similarity.

In one or more embodiments of the method, the method may further include obtaining spatial and field-of-view (FOV) relations between the two cameras. The at least one condition may include that the spatial and FOV relations indicate that both regions correspond to a same part of a scene captured by the two cameras. Assuming that two regions are texturally similar based on how the cameras are aligned, and what the cameras are likely to capture, may for example eliminate, or complement, the need for e.g. image segmentation and similar.

In one or more embodiments of the method, the method may further include obtaining (e.g. determining) a perspective transformation that, when applied to the second image, improves at least one of a spatial alignment and an orientation of the region of the second image with the region of the first image. The reference may be to the second image transformed by the perspective transformation. Improving the spatial alignment and orientation between the regions may for example help to reduce the effort required to perform motion vector searching in the second image in order to find e.g. macroblocks similar to those of the region of the first image. It should also be noted that in some embodiments, applying such perspective transformations may not be necessary, at least not for some regions, and in particular for regions containing image textures that has little or no spatial alignment/orientation, such as depicting e.g. generic sky, asphalt, foliage, and other more spatially homogenous textures.

In one or more embodiments of the method, the method may further include providing data indicative of the perspective transformation via an interface that is accessible to a receiver of the one or more encoded video streams, such as at least one of a client, receiver and decoder. Consequently, the second image need not be encoded in its transformed state, but the receiving decoder may apply the transformation on the second image (after having decoding it), and then use the transformed version to then decode the first image, using e.g. motion vectors meant to point towards parts of the transformed version of the second image.

In one or more embodiments of the method, the method may further include selecting, out of the images, the first image as the image having a higher pixel-density in its region and the second image as the image having a lower pixel-density in its region. This may have the advantage that the lower-resolution may be "cheaper" to send over the network and decode at the other camera. In addition, a quality fit for e.g. scalable video encoding may be improved, as there may otherwise be a need to first scale down the higher-resolution image to below the lower-resolution image in order to use the then newer lower-resolution image as reference for encoding the then newer higher-resolution image.

In one or more embodiments of the method, the method may further include encoding both images (i.e. both the first and second image) as part of a same, multi-layered video stream. This may for example be particularly useful in terms of encoding efficiency, if using e.g. newer standards such as Low Complexity Enhancement Video Coding (LCEVC), allowing to complement hardware coded base layer information with efficient, low-complexity enhancement layer information.

In one or more embodiments of the method, the method may further include encoding the second image in a base layer of the video stream and the first image in an enhancement layer of the video stream. For example, the image in the base layer may be the image having a lower pixel-density in its region, and the image in the enhancement layer may be the image having a higher pixel-density in its region.

In one or more embodiments of the method, the FOVs of the two cameras may not overlap. This may be advantageous in that even though the FOVs do not overlap, one camera may capture objects of e.g. a same class, with similar image textures, as objects captured by the other camera. The envisaged solution may thus still be capable of identifying texturally similar regions in both images, and use this to an advantage in order to improve encoding efficiency and e.g. bitrate requirements for transferring of both images. For example, two cameras may be arranged to record a soccer/football match, or similar. Even though the FOVs of the cameras do not overlap, both cameras are likely to capture at least some regions containing e.g. grass (or whatever material the playing field is formed on), and encoding efficiency and bitrate requirements may thus be improved by encoding one region with reference to the other, instead of encoding, without system-perspective, each image separately.

According to a second aspect, there is provided a computer-implemented method for encoding an image captured by a video camera. The method is performed in/by a video camera (e.g. by processing circuitry of the video camera), and includes obtaining a respective image from the video camera and another (video) camera. The method includes determining that, according to at least one condition, a region of one of the images has an image texture similar to a region of the other image. The method further includes encoding the images as part of one or more encoded video streams, wherein encoding of the region of a first image of the images includes using the region of the other, second image of the images as a reference. In some examples, encoding of the region of the first image may be performed in response to the determining, wherein the determining may be performed repeatedly (for each new image captured by the video camera) or at least once (e.g. after installation and/or setup of the video camera).

According to a third aspect, there is provided a video camera system. The video camera system includes two separate video cameras, and processing circuitry configured to perform the (operations of the) method of the first aspect (or of any example embodiment thereof as described herein).

According to a fourth aspect, there is provided a video camera. The video camera includes at least one image sensor for capturing an image. The video camera includes an interface for receiving another image from another (video) camera. The video camera further includes processing circuitry configured to perform the (operations of the) method of the second aspect (or of any example embodiment thereof as described herein).

According to a fifth aspect, there is provided a computer program that includes instructions that, when executed by processing circuitry of a video camera system (such as the system of the third aspect) that includes two separate cameras, causes the video camera system to perform the (operations of the) method of the first aspect (or of any example embodiment thereof as described herein).

According to a sixth aspect, there is provided a computer program that includes instructions that, when executed by processing circuitry of a video camera (such as the video camera system of the fourth aspect), cause the video camera to perform the (operations of the) method of the second aspect.

According to a seventh aspect, there is provided a computer program product that includes a computer-readable storage medium storing the computer program of at least one of the fifth and sixth aspect.

As used herein, the computer-readable storage medium may for example be non-transitory and be provided as (or be) e.g. a hard disk drive (HDD), solid state drive (SSD), USB flash drive, SD card, CD/DVD, and/or as any other storage medium capable of non-transitory storage of data. In other embodiments, the computer-readable storage medium may be transitory and e.g. correspond to a signal (electrical, optical, mechanical, or similar) present on e.g. a communication link, wire, or similar means of signal transferring, in which case the computer-readable storage medium is of course more of a data carrier than a data storing entity.

Other objects and advantages of the present disclosure will be apparent from the following detailed description, the drawings and the claims. Within the scope of the present disclosure and the accompanying claims, it is envisaged that all features and advantages described with reference to e.g. the method of the first aspect are relevant for, apply to, and may be used in combination with also the method of the second aspect, the video camera system of the third aspect, the video camera of the fourth aspect, the computer program of each of the fifth and sixth aspects, and the computer program product of the seventh, and vice versa.

### Brief description of the drawings

Exemplifying embodiments will be described below with reference to the accompanying drawings, on which:
Figure 1 schematically illustrates, in a perspective view, an example embodiment of a video camera system according to the present disclosure, wherein the system is configured to capture one or more scenes from different angles;
Figures 2A, 2B and 2C schematically illustrate examples of images captured by the cameras of the system illustrated in Figure 1;
Figures 3A and 3B schematically illustrate examples of perspective transformations according to the present disclosure, that may be applied to an image to improve a spatial alignment and/or orientation between regions of that image and another image that are determined to have regions with similar image textures;
Figure 4 schematically illustrates a flowchart of one or more example embodiments of a method according to the present disclosure, for encoding of images captured by separate video cameras;
Figure 5 schematically illustrates a flowchart of one or more example embodiments of a method according to the present disclosure, for decoding images of one or more encoded video streams generated by the method of Figure 4;
Figures 6A and 6B schematically illustrate various example embodiments of a video camera system and a video camera according to the present disclosure;
Figures 7A and 7B schematically illustrate components and functional blocks of various example embodiments of a device according to the present disclosure, such as used in a video camera system, video camera or decoder as envisaged herein, and
Figure 8 schematically illustrates example embodiments of computer programs, computer program products and computer-readable storage medium according to the present disclosure.

In the drawings and Figures thereon, like reference numerals will be used for like elements unless stated otherwise. Unless explicitly stated to the contrary, the drawings show only such elements that are necessary to illustrate the example embodiments, while other elements, in the interest of clarity, may be omitted or merely suggested. As illustrated in the Figures, the (absolute or relative) sizes of elements and regions may be exaggerated or understated vis-à-vis their true values for illustrative purposes and, thus, are provided to illustrate the general structures of the example embodiments.

### Detailed description

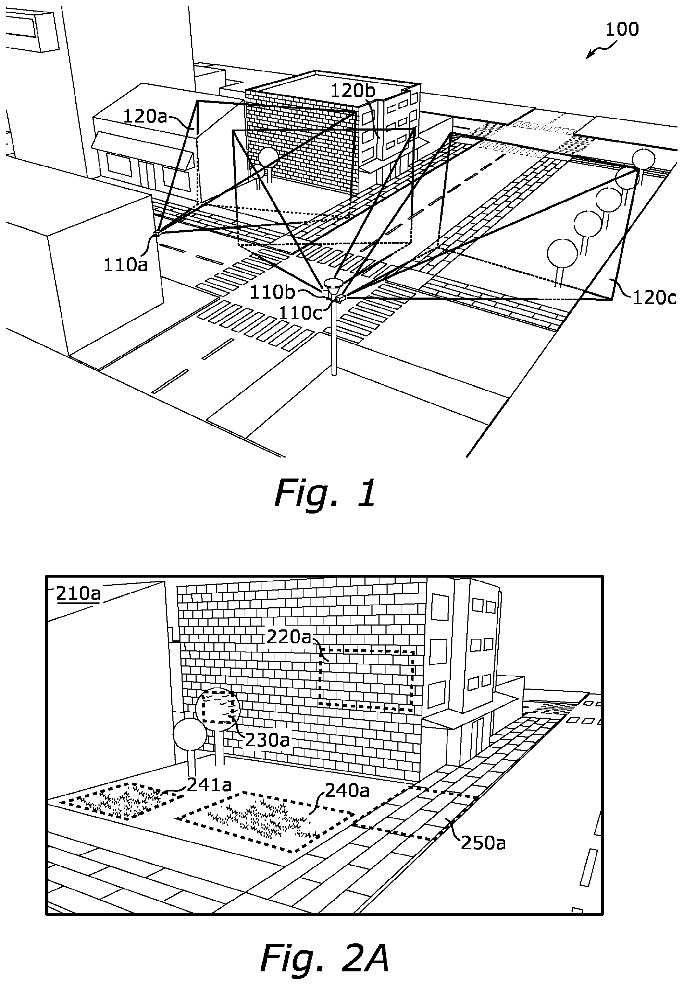

An example of a setup in which the envisaged solution is applicable will now be described in more detail with reference to Figure 1.

Figure 1 schematically illustrates, in a perspective view, an arrangement 100 of a plurality of video cameras 110a, 110b and 110c configured to monitor parts of a scene from different angles. Hereinafter, the terms "video camera" and just "camera" will be used interchangeably, if not stated to the contrary.

In this particular example, the scene is that of a city scenery, and the cameras are mounted on e.g. buildings, light posts, and similar in the city and configured such that they each have a corresponding FOV 120a, 120b and 120c, respectively. The cameras 110a-c form part of a video camera system as envisaged herein. In this particular example, the FOVs 120a and 120b of the cameras 110a and 110b, respectively, overlap, while the FOV 120c of the camera 110c does not overlap any of the FOVs 120a and 120b. It is to be noted that, as will be described in more detail later herein, the exact setup and number (≥ 2) of cameras is not critical for the solution as envisaged herein to work, and that the scene captured by the cameras may of course be any scene wherein monitoring of the scene from different angles is desirable. In fact, one or more of the cameras need not to be stationary, and may for example be a dashcam in a car, a body-worn camera, a drone camera, or other camera mounted to a non-stationary object, such as a human, animal, vehicle, and similar.

Each camera 110a-c is configured to capture images, and each captured image will thus correspond to a part of the scene within the corresponding FOV 120a-c of the camera. As none of the FOVs 120a-c are equal, the cameras 110a-c thus captures different parts of the scene, although the part of the scene captured by e.g. camera 110a will at least partially overlap with a part of the scene captured by the camera 110b, and vice versa, as the FOVs 120a and 120b partially overlap. The camera 110c will, however, capture a different part of the scene that does not overlap with the parts captured by cameras 110a and 110c, due to its non-overlapping FOV 120c.

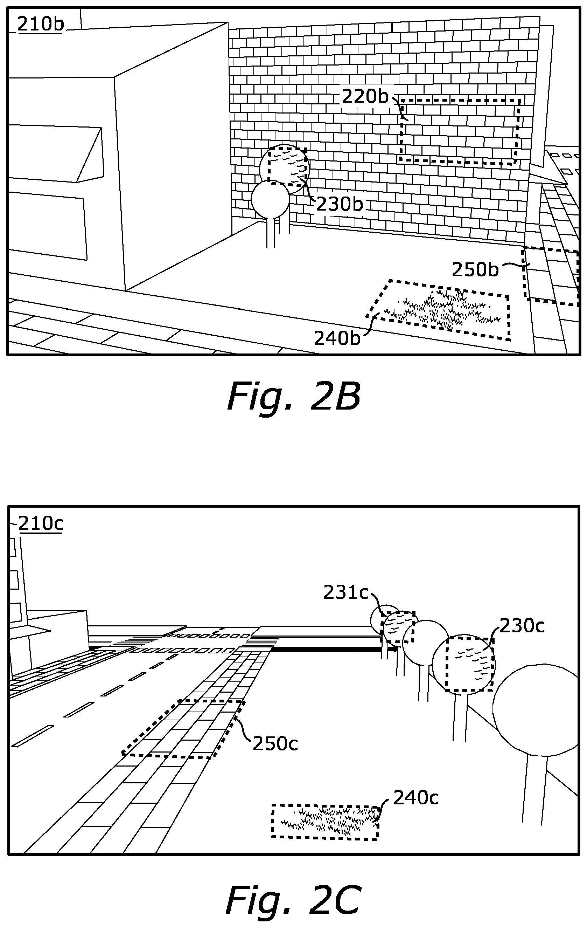

Examples of images captured by the cameras 110a-c will now be given with reference also to Figures 2A, 2B and 2C.

Figure 2A schematically illustrates an image 210a captured by camera 110a. Due to the complexity of the scene, the image 210a will include regions that have different image textures. For example, for exemplary purposes only, five such regions are highlighted in Figure 2A. A first region 220a corresponds to a part of a brick wall (of a building), and has an image texture with a brick wall pattern. A second region 230a corresponds to a part of a tree, and has an image texture with a leaf/foliage pattern. A third region 240a corresponds to a part of a lawn, and has an image texture with a grass pattern. For illustrative purposes, there is also included a fourth region 241a that also corresponds to a part of the same lawn, and that also has an image texture with a grass pattern. Finally, a fifth example region 250a corresponds to a part of a sidewalk/pavement, and has, in this particular example, an image texture with a slate, cobblestone, or similar, pattern. The image 210a may, of course, include additional such regions of different and/or similar image textures and of different and/or similar shape and size, but to avoid cluttering of the Figure only a few possible regions are highlighted.

Figure 2B schematically illustrates an image 210b captured by camera 110b. The image 210b captures almost a same part of the scene as the image 210a, but due to the FOVs 120a and 120b not being completely equal, the image 210b is captured from a different angle/position than the image 210a, and there are thus some visual differences. However, in image 210b, there may be identified a number of regions that have image textures similar to those of the regions highlighted in Figure 2A. For example, a first region 220b of image 210b has a similar image texture as region 220a of image 210a, as both regions corresponds to part of the same brick wall. Likewise, a second region 230b has a similar image texture as region 230a of image 210a, as both regions correspond to part of a tree; a third region 240b has a similar image texture as region 240a, as both regions correspond to part of a lawn, and a fourth region 250b has a similar image texture as region 250a, as both regions correspond to part of a pavement/sidewalk/walk lane, and similar.

Figure 2C schematically illustrates an image 210c captured by camera 110c. Due to the non-overlapping FOV 120c, the image 210c captures a different part of the scene than any of the images 210a and 210b. However, there are still regions in the image 210c that have similar image textures as corresponding regions of one or more of the images 210a and 210b. For example, a region 230c (and/or e.g. a region 231c) of the image 210c has an image texture similar to those of regions 230a and 230b, as they all correspond to trees; region 240c of the image 210c has an image texture similar to those of regions 240a, 241a, and 240b, as they all correspond to lawns; and region 250c of the image 210c has an image texture similar to those of regions 250a and 250b, as they all correspond to pavements/sidewalks/walk lanes, and similar. Consequently, even though the FOV of the camera 110c does not overlap with any of the FOVs 120a and 120b, there may still be regions in the image 210c ( captured by the third camera 110c) that has one or more image textures similar to what is found in one or more regions of other images, especially if similar types of (but not necessarily the same) objects are found in all images.

Generally, the solution as envisaged herein is built upon the realization that when there are such regions with same or similar image textures in multiple images, encoding of one image can be made more efficient, by using one of the other images for reference. In particular, this can be true not only when the image textures are exactly the same, with a same orientation and spatial alignment, but also to at least some extent as long as there are at least some visual similarities between two regions of different images. Phrased differently, even though two regions do not have exactly the same image texture, and/or even if the image textures of the regions are not perfectly aligned and oriented, encoding one region with reference to the other region may still be advantageous in terms of e.g. bitrate requirements, as e.g. encoding a region with reference to another region, plus an eventual difference/residual term, may still be more efficient than to encode the regions individually without any such reference.

As envisaged herein, whether one region has an image texture similar to that of another region is to be determined by checking a fulfillment of at least one condition. As used herein, an "image texture" may correspond to a (small-scale) structure perceived on an image, based on e.g. spatial arrangement of color or intensities.

For example, image textures may be segmented based on e.g. features such as spatial frequency, average grey level, and similar, and the image textures of the separate regions may be compared using structured and/or statistical approaches. Structured approaches may for example include to consider an image texture as a set of primitive texels in a regular or repeated pattern, and characterization of the spatial relationship of the texels may be gathered using e.g. Voronoi tessellation and similar. Statistical approaches may for example include to consider an image texture as a quantitative measure of arrangement of intensities in a region, and use or at least borrow from methods such as edge detection, co-occurrence matrices, texture energy measures, auto-correlation, and similar. Textures may be segmented using e.g. region-based and/or boundary-based methods, and similar.

Other examples may, instead or in addition, include to consider two regions to have a same or similar image texture if the regions are determined to include (or correspond to) one or more objects of a same (object) class. Determining the class of an object/part of an image may thus, instead of or in addition to texture segmentation as described above, be achieved by performing one or more other forms of image segmentation, i.e. to partition an image into multiple image segments (e.g. image regions or image objects). For example, pixels of the image can be labeled and pixels that share a same label can be considered to share certain characteristics, i.e. to correspond to a same object class and thus to (at least statistically likely) share a same (or similar) image texture. In some examples, semantic image segmentation may be used, wherein all objects of a same type are assigned a same label (or class id). Object types/classes may for example include sky, grass, dirt, gravel, stone, rock, cobblestone, tile/slate, brick/brick wall, tarmac/asphalt, and of course also any of multiple other possible types of texture. In some examples, object types may be further subdivided based on e.g. lighting, color, and similar. Using "grass" as an example of an object class (or type), the class may for example be further subdivided into e.g. well-lit grass, medium-lit grass, poorly-lit/dark grass, and similar. Other examples include to e.g. provide different sub-classes/labels for e.g. green grass, brown grass, yellow grass, or for any other thinkable, and suitable division. In other examples, instance segmentation may be used, wherein distinct objects of a same type/class may be identified. In yet other examples, combinations thereof such as panoptic segmentation may be used, capable of identifying not only object type/class but also e.g. different instances of a same object type/class. It should be noted that for the solution as envisaged herein to work, object identified as belonging to a same class need not also be a same instance of that class, i.e. it may be assumed that even if two objects correspond to e.g. two different trees, there image textures may be assumed sufficiently similar due only to them both being trees.

Image segmentation may for example be implemented using computer vision-based approaches and/or by the use of techniques based on artificial intelligence (AI). Image segmentation may for example be implemented by using or borrowing from ideas such as thresholding, data clustering (such as K-means algorithms), motion and interactive segmentation, compression-based methods, histogram-based methods, edge detection, isolated point detection, dual clustering methods, region-growing methods, partial differential equation (PDE)-based methods (e.g. parametric methods, level-set methods, fast marching methods, and similar), variational methods, graph partitioning methods (e.g. Markov random fields, maximum a posteriori methods, simulated annealing, iterated conditional modes/gradient descent, etc.), watershed transformations, mode-based segmentation, multi-scale segmentation, and/or trainable segmentation utilizing artificial neural networks (ANNs). Examples of the latter include e.g. self-organizing (feature) maps (SOMs or SOFMs)/Kohonen networks, U-net (or other convolutional neural network-based methods), ResU-Net/R2U-Net, SegNet, ENet, BoxENet, or any other suitable architecture, such as e.g. one or more transformer architectures or encoder-decoder architectures. As envisaged herein, yet further examples of how to determine whether two regions of two images captured by different cameras are sufficiently texturally similar may include to e.g. just assume that they are, and to study the resulting bitrate of the encoded video stream in order to determine if such an assumption was correct or not, as the textural similarly can be assumed to result in a reduced bitrate compared to there being no such textural similarity. Yet other examples include e.g. the use of feature matching, for example by one or more scale-invariant feature transform- (SIFT-)based algorithms.

Using the images 210a and 210b as examples, image segmentation may be performed on both images, resulting in e.g. regions 220a and 220b both being classified as e.g. "brick wall"; regions 230a and 230b both being classified as e.g. "tree", "bush" or similar; regions 240a/241a and 240b each being classified as e.g. "grass"/"lawn"; and regions 250a and 250b both being classified as "pavement", "tiles", "slate", "cobblestone", and similar. In some examples, such classification may result in the regions also being further classified as corresponding to same or similar lighting conditions (such as dark, medium-lit, bright, etc.) and/or color (such as brown, red, green, yellow, etc.), and similar.

The at least one condition for determining that two regions of both images 210a and 210b have same or similar image texture may consequently include to require that both regions are associated with/classified as a same object class and/or object sub-class. If each object class and/or sub-class is assigned a particular number, the condition may include that the numbers for both regions are the same. If each object class and/or sub-class is assigned a probability, the condition may include that the probabilities for both regions are both sufficiently high (e.g. above a probability threshold) for a same class and/or sub-class, and e.g. equal or sufficiently equal (e.g. with an absolute difference therebetween below a difference threshold), or similar. Other examples of how to determine whether two regions are classified as belonging to a same or similar object class is of course also possible. For example, determining that e.g. the regions 240a and 240b have a similar image textures may require that both regions are classified as belonging to a same object class and/or subclass, e.g. that both regions are classified as "grass", and optionally also as grass having a same lighting condition and/or color, and similar. It should be noted that explicit labels such as "grass", "rock", "brick wall", etc., are of course not required, and that any way of distinguishing between different classes (such as different bits, integers, floating point numbers, or anything suitable) is sufficient for the purpose of the present disclosure.

Further, whether the image textures of the two regions are also spatially aligned and oriented may or may not be taken into account. As envisaged herein, the solution can still work, i.e. serve to reduce e.g. a computational complexity, a total amount of data required to encode both images, a bitrate required to transfer the images as encoded, etc., even if the spatial alignment and/or orientation of the image textures of two regions is not the same, as long as the image textures are of a same or similar type. This under the assumption that as long as the image textures are same or similar, there may be at least some visual information/data shared between the regions, allowing to encode one region with reference to the other region, even though there is not perfect spatial alignment between and/or a same or similar orientation of the image textures of the two regions. Phrased differently, attempting to encode one region with reference to the other region may reduce the size of the difference/residual terms between the regions, thereby providing for a more efficient encoding.

Further, the exact size of the regions illustrated in e.g. Figures 2A-C are of course only examples. For example, the region 220a and/or 220b may be extended to cover a greater portion of the brick wall of the building, or e.g. be reduced to cover a lesser portion. A region may be defined such that it e.g. covers as large of an area having a same image texture as possible, or e.g. as large of an area having a same image texture but also with a same spatial alignment and/or orientation as possible, and similar. A size/shape of a region may for example be decided by maximizing a region containing image texture of a same type, depicting a particular object, and similar. In other examples, regions may be maximized with a restriction that they still assume approximately a same size, shape and/or position in both images. A size/shape of a region may of course also be decided by other means, such as by predetermined size and/or shape values, based on historical analysis of whether a particular combination of region sizes and/or shapes resulted in an improved encoding efficiency or not, and similar. For example, the envisaged solution may include comparing rectangles to rectangles, but it is envisaged that any help available from the matching regions may be useful to make encoding of the images more efficient, regardless of an exact form/shape of the overlapping region of sufficiently similar image textures. For example, an optimization problem may be solved, with an objective of increasing a size of both regions (i.e. each region in each respective image), with a cost function defined to penalize candidate solutions where a larger proportion of one region has now texturally similar counterpart in the other region, and vice versa. Other solutions are of course also envisaged, including e.g. to increase the regions until no significant reduction of bitrate of the resulting encoded video stream is (no longer) seen, or e.g. until the resulting bitrate starts to increase again, and similar. Other examples include to directly consider the resulting difference/residual terms resulting from attempting to encode one region with reference to the other, wherein it is expected that such terms will increase when textural similarity between all of the regions decreases, and vice versa.

As another example as envisaged herein, whether two regions in different images captured by different cameras are considered to have a same or similar image texture may be based solely, or in addition, on spatial and FOV relations between the cameras. Such relations may include e.g. knowledge about differences in physical position, physical orientation/heading, zoom-level, image sensor properties and/or lens arrangement properties (such as e.g. focal length), and/or similar, between the cameras. Parameters may be provided separate for each camera and differences between the cameras for such parameters may be calculated based thereon, or e.g. the differences may be provided directly (such that only the relative differences between the cameras are known/taken into account). For example, data may be provided for each camera indicative of its position (in e.g. x-, y- and z-coordinates), its orientation (in e.g. pan-, tilt- and yaw-angles), and its zoom-level, or of any other parameters from which the FOV (i.e. what is seen by the camera) may be deduced. In other examples, data may be provided indicative (only) of differences in position, orientation and/or zoom-level (i.e. difference in FOV), and similar, and not of individual values.

Based on such data, it may be deduced that a particular region of one image captured by one camera corresponds to a same part of the scene (and to e.g. a same object) as a particular region of another image captured by another camera. It may then be assumed that due to the regions (likely) capturing a same part of the scene, the regions also likely have a same or similar image texture. This may be assumed either with or without performing further analysis of the images, such as texture and/or image segmentation. An advantage is of course that if not performing any further such analysis, the amount of computational power and resources required to implement the solution of the present disclosure may be further reduced, thus freeing up such resources for other purposes or allowing to e.g. build the cameras and/or equipment required to process the images from the cameras using simpler and/or more cost-effective hardware.

As an example, from knowledge about the spatial and FOV relations between the cameras 110a and 110b, it may be assumed that the region 220a found in image 210a likely corresponds to a same part of the scene as the region 220b found in image 210b, and it may be assumed that the image texture of the two regions 220a and 220b is the same or similar, and further be decided to encode one of the regions 220a and 220b with reference to the other image and region to provide a more efficient encoding, and similar for other pairs of regions such as 230a, 230b; 240a/241a and 240b; and 250a, 250b.

Figure 2C serves to illustrate that for the envisaged solution to work, the FOVs of two cameras do not necessarily need to overlap. Although it may then be harder to decided that two regions are likely to have a same or similar image texture due to the two regions depicting a same part of the scene, it may still be deduced that the two regions have a same or similar image texture due to depicting e.g. objects of a same class/type, or by confirming that the image textures of the two regions are same or similar using some other measure (such as based on texture segmentation). Phrased differently, using the images 210a and 210c as examples, as all of the regions 230a, 230c and 231c correspond to parts of the scene including trees, one or more of these regions in one image may be encoded with reference to one or more such regions in the other image, even though regions in the different images do not necessarily correspond to e.g. a same individual tree (i.e. to a same instance of the same object class). This because, of course, although e.g. two trees are different individuals, their visual properties (i.e. image textures) may still likely be same or similar, and advantage may be taken of this fact to encode one with reference to the other. The same of course applies to other regions depicting other types of objects, such as regions 240a/241a and 240c all depicting grass/lawn, and e.g. regions 250a and 250c both depicting pavement, and similar.

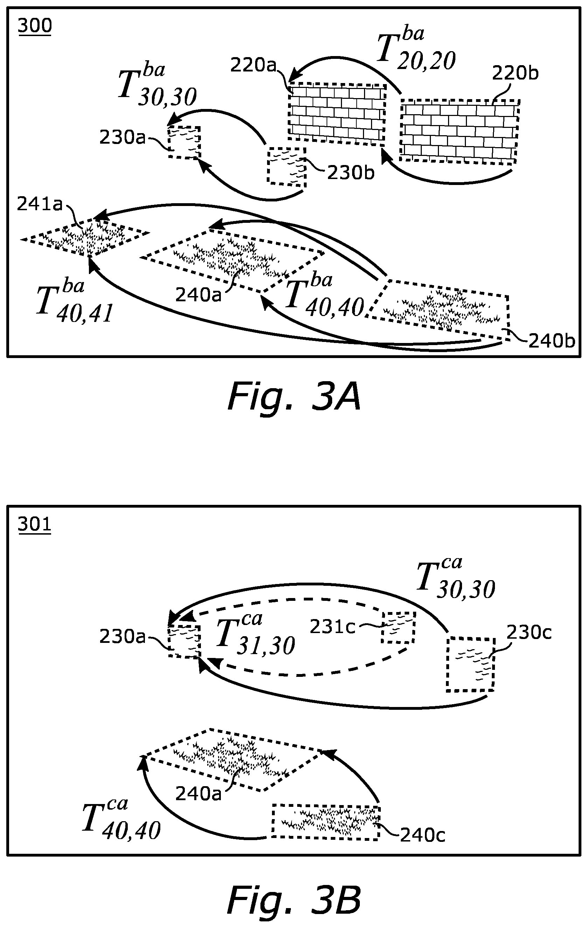

As envisaged herein, when encoding a region of one image with reference to another image, such a procedure may include to perform so-called motion vector searching, wherein the region of the image that is to be encoded is divided into e.g. one or more macro-blocks (such as 4×4, 8x8, 16×16, etc., pixels), and wherein for each such macroblock of the region that is to be encoded, a search is performed in the other image to find whether there is a visually similar macroblock in that other image. If affirmative, a motion vector may be provided, indicative of where in the other image the corresponding macroblock is to be found. Such motion vector searching is however often rather computationally expensive, in particular when the two images are not well aligned (due to e.g. movement of a camera capturing both images, or due to e.g. FOVs of separate cameras capturing the images being different), as the search area in the other image needs to be expanded before successfully being able to find a matching corresponding macroblock therein, or e.g. to conclude that there is no such matching macroblock and that the particular region instead needs to be encoded without reference to the other image (as the resulting residuals would likely not be small enough). As envisaged herein, motion vector searching (or "motion estimation") may for example be performed using various block matching algorithms, phase correlation, pixel recursive algorithms, optical flow, and similar. Block matching algorithms may for example use mean difference or mean absolute difference (MAD), mean square error (MSE), and similar as evaluation metrics for whether there is a matching macroblock or not, and a search parameter indicative of the used search area may need to be expanded if the spatial alignment and/or orientation between the regions of two images is not optimal. To at least partially alleviate this issue, in some examples of the present solution, it is envisaged to obtain (e.g. by calculating) one or more perspective transformations that, when applied to the other image, improves at least one of a spatial alignment and an orientation of the one or more region of the other image with the one or more regions that is to be encoded with reference to the other image. Examples of such transformations will now be further explained with reference also to Figures 3A and 3B.

Figure 3A schematically illustrates an example set 300 of perspective transformations ${T}_{i , j}^{ba}$, for transforming between regions in the (second) image 210b (region "*i*" in image "*b*") and regions in the (first) image 210a (region "*j*" in image "*a*"). To avoid cluttering the image, only a few possible such perspective transformations are illustrated. For example, a perspective transformation ${T}_{20 , 20}^{ba}$ is considered to represent the perspective transformation from region 220b to region 220a (i.e. to align the region of brick wall 220b with the region 220a). ${T}_{30 , 30}^{ba}$ is a transformation to align the region 230b to region 230a, and ${T}_{40 , 40}^{ba}$ and ${T}_{40 , 41}^{ba}$ are transformations to align region 240b to region 240a and 241a, respectively. Such transformations for various regions may of course be defined as part of a single transformation *T^{ba}* for aligning regions of image "*b*" (here 210b) to regions of image "*a*" (here 210a), and so on. Of course, inverse transformations ${T}_{j , i}^{ab}$ or *T^{ba}* may of course also be defined, to instead align regions of the image 210a with regions of the image 210b. It is to be noted that herein, which image that is assigned the label "first image" or "second image" can change depending on the implementation and/or details of the respective images/cameras.

Conceptually, the perspective transformations are such that when they are applied on an image that is to be used as reference to encode another image, the regions of this reference image are made to better align (i.e. spatially and/or with regards to orientation) with the regions of the other image. In terms of motion vector searching, finding a matching macroblock in the reference image for a macroblock of a region in the image that is to be encoded is thus made easier, as it may be expected that e.g. the search area required to find such a matching macroblock does not need to be expanded (if all) as much before being able to find a matching macroblock. Phrased differently, by first applying the one or more perspective transformations to the reference image, finding of motions vectors for encoding one or more regions of the other image with reference to the reference image can be made more computationally efficient than if instead attempting to find such motion vectors without first applying the one or more perspective transformations. Likewise, even if the perspective transformations do not necessarily change the spatial alignment (i.e. the positions of) the one or more regions in the reference image but only their orientations, it is envisaged that e.g. motion vector searching in the reference image (after having applied the one or more transformations) may still be made easier as the chance of more quickly finding a matching macroblock still improves, as finding a macroblock that is physically oriented similarly to the target macroblock (i.e. the macroblock of the image to be encoded) may be easier than trying to find a macroblock that is not physically oriented similarly to the target macroblock. From another perspective, the time required to perform the motion vector searching is not the only aspect. Even if a time required to find the matching macroblock remains e.g. the same, improving the spatial alignment and/or orientation by applying the one or more perspective transformations may result in a better matching macroblock, that results in smaller difference/residual terms that need to be encoded, and thus results in a more efficient encoding not only in terms of speed but also in terms of required size (in terms of e.g. bits) or bitrate required. Consequently, determining and applying the one or more perspective transformations may be beneficial in multiple ways.

As envisaged herein, the one or more perspective transformations (or transforms; such as *T^{ba}*) may be found based on knowledge about the spatial and FOV relations between the cameras used to capture the images. For example, it may be deduced based on such relations that in order to better align regions of the reference image to those of the image to be in encoded in order to improve the efficiency of motion vector searching, the regions of the reference image may need to be translated, scaled and/or rotated in a particular way, based on the known difference in e.g. position, orientation and e.g. zoom-level between the cameras. In Figure 3A, examples of such transformations are illustrated by the arrows, indicating how e.g. corners of the regions (2Xb) of the image 210b are to be transformed to align with corners of the regions (2Xa) of the image 210a. It is also illustrated how e.g. the region 240b of image 210b may be used to encode either one or both of the regions 240a and 240b of the image 210a, as both regions 240a and 240b corresponds to a grass-like image texture.

Figure 3B schematically illustrates another example set 301 of one or more "perspective" transformations ${T}_{i , j}^{ca}$, i.e. between region "*i*" of image "*c*" and region "*j*" of image "*a*", such as from regions 2Xc of the image 210c to regions 2Xa of the first image 210a. In particular, Figure 3B serves to illustrate that there may be multiple regions in a reference image (such as image 210c) that have an image texture that is similar to, or same as, that of a region in the image to be encoded (such as image 210a), and that one of the regions 230c and 231c may thus be used to encode the corresponding region 230a of the image 210a with reference to the image 230c. If there are multiple regions in an image that can be used as reference for encoding a region in another image, which of the multiple regions to use may be decided based on some suitable criteria, including e.g. which region that best spatially aligns with the region to be encoded, which region that has an image texture deemed most similar to the region to be encoded, and similar. Such a decision may for example be made using any of the similarity metrics described herein, or e.g. by studying of the resulting bitrate of the encoded video stream and/or of the resulting difference/residual terms when attempting to encode one region with reference to the other.

Figure 3B also serves to illustrate that in the envisaged solution, a "perspective transformation" does not necessarily require that there is an actual overlap in FOV between two cameras, i.e. the "perspective" (in such a case) transformation need not to be an actual perspective transformation in order to transform part of the scene that is visible in both images, but may be a scaling, translation and/or rotation of parts of the reference image such that if e.g. positioned on top of the first image, the translated regions of the reference image ends up being more aligned and/or oriented with the one or more regions of the other image that are to be encoded, such that e.g. motion vector searching in the (transformed) reference image to find features similar to those of the one or more regions to be encoded becomes more efficient/quicker. Phrased differently, the matrices such as *T^{ca}* need not be physically correct perspective transformations obtained based on camera parameters, but can correspond to one or more scaling-/translation-/rotation-operations to better align regions between images even if the regions are not of a same part of the scene (such as of a same instance of an object, or similar).

As one example as envisaged herein, one alternative for how to obtain the transformations such as exemplified in Figures 3A and 3B includes to generate a homography between overlapping camera FOVs, such as between FOVs 120a and 120b. This may for example be done by identifying a couple (such as e.g. 3 to 4) of points/features that are present in both images 210a and 210b, e.g. manually as part of a calibration process for the cameras 110a and 110b, or automatically by using contemporary feature matching methods (like SIFT) or e.g. AI-based feature matching methods. Based on such points, and how they different between the images, a matrix may be produced that describes a perspective transformation between FOVs 120a and 120b, and similar, as a person skilled within the field of e.g. image analysis would understand. As another alternative, a three-dimensional (3D) model of the local scene may be constructed. For example, intrinsic parameters (including e.g. lens distortion, focal width, zoom-level, pixel pitch, etc.) and extrinsic parameters (including e.g. camera tilt, roll, installation height, and similar) of both cameras (such as cameras 110a and 110b) can be fetched, or obtained as part of calibration of the cameras. A 3D model of the scene may be estimated, e.g. by importing from an from an external system such as a geographical information system (GIS), or e.g. by utilizing AI-implemented depth models, and similar. For each pixel in an image captured by e.g. camera 110a, e.g. as defined by x- and y-coordinates, one could then arrive at its corresponding position, e.g. as defined by X-, Y- and Z-coordinates, in the 3D model, by calculating its projecting direction into the 3D model and see which point of the 3D model that it intersects, based on the intrinsic and extrinsic parameters of the camera 110a. For the other camera 110b, a trace-back from the position (X,Y,Z) to a corresponding pixel (x',y') in the image captured by the camera 110b can be performed using the intrinsic and extrinsic parameters of the camera 110b, and the perspective transformation(s) can then be calculated based on a couple (such as 3-4) of such matched points between the two images.

In some examples, it is envisaged that motion vector searching may not always be necessary, and that knowledge about the spatial and FOV relations between two cameras use to capture two images may be used to directly obtain motion vectors, thus reducing the required computational effort otherwise consumed by such searching. For example, if it is determined that e.g. a region in one image depicts a part of the scene that is also found in the other image, where to look for similar image texture in the reference image may then be calculated/estimated based on a known difference in e.g. position, orientation, zoom-level, etc., between the cameras. As already mentioned herein, the envisaged solution may be beneficial even though there is not a perfect mapping between the region to be decoded and a selected region in the reference image, i.e. even if motion vectors are not perfectly calculated, as long as there is at least some similarity of image texture between the region to be encoded and the region in another image (as referenced by e.g. motion vectors), as such similarity may still be used to encode the region more efficiently. If not using the spatial and FOV relations between two cameras to directly obtain motion vectors without motion vector searching, knowledge about such relations may also/still be used to e.g. reduce the time and/or effort required for motion vector searching, e.g. by offset of a search window and/or zero-cost point based on such relations in order to help the encoder.

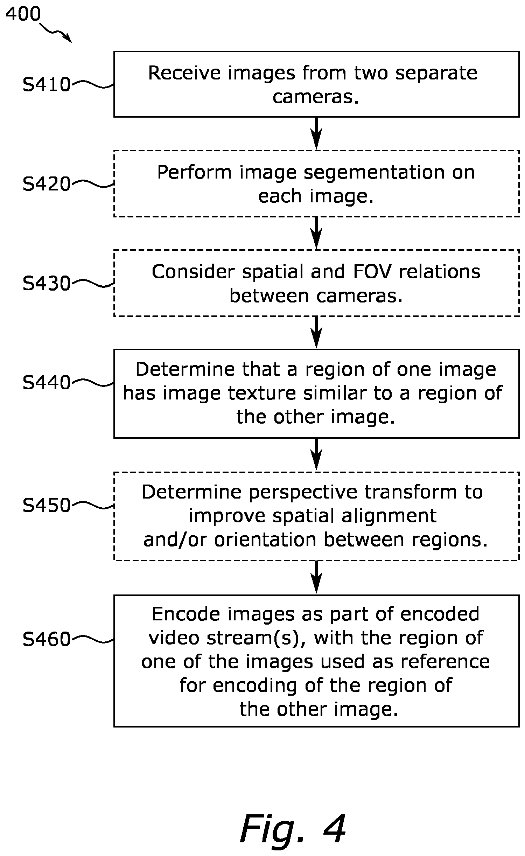

Figure 4 schematically illustrates a flowchart of one or more examples of a method 400 for encoding of images captured by separate video cameras as described and envisaged herein, such as for example for encoding of any combination of two or more of the images 210a-c captured by the cameras 110a-c. The method is performed by processing circuitry of e.g. a video camera or of a video camera system. The method 400 will be described with reference to the example(s) provided in Figures 1, 2A-C, 3A and 3C, but is of course applicable to any situation involving at least two images each having been captured by a separate video camera.

As part of an operation S410, the method 400 includes to receive images from two separate cameras. For example, one received image may be the image 210a captured by camera 110a, and another received image may be the image 210b captured by camera 110b. As envisaged herein, "receiving images" may include to receive one or both of the images directly from the respective camera(s), as e.g. raw image data; receiving one or both of the images not as raw image data but as one or more images resulting from at least processing of such raw image data; receiving one or more of the images from a storage, or by any other means resulting in the receival of at least two images, and wherein the images are to be encoded as part of one or more encoded video streams.

As part of an operation S440, the method 400 further includes to determine that a region of one of the images has an image texture similar to a region of the other image, as already exemplified with reference to Figures 1 and 2A-2C. For example, it may be determined that the regions 220a and 220b have similar image textures (due to both showing part of a brick wall, or similar).

As described already herein, whether the regions have similar image texture is to be determined according to at least one condition, i.e. there is at least one condition that needs to be fulfilled to conclude that the image textures of the regions are similar. For example, the method 400 may optionally include an operation S420 preceding the operation S440, that includes to perform image segmentation on the images, and one such condition may include that the regions are determined to depict e.g. objects (or textures) belonging to a same class, or at least to classes that have been decided as being sufficiently "similar" (e.g. with image textures expected to be sufficiently similar), or that texture segmentation indicates that the image textures are sufficiently similar. For example, if the region to be encoded depicts at least part of a tree, the condition may be fulfilled if the other region also depicts a tree, or e.g. if the other region depicts an object deemed sufficiently similar to a tree, such as e.g. a bush, hedge, or similar. As envisaged herein, being similar may mean belonging to a same class with an assumption that all instances of the same class will have sufficiently similar image textures, or e.g. by actually confirming that the image textures are sufficiently similar (as result of e.g. texture segmentation). In fact, for what concerns the envisaged solution, even a billboard, poster or other image showing at least part of e.g. a tree, or anything with similar texture, would be a candidate for being used as a reference, as the textural similarity between e.g. a tree and anything depicting something, or being, similar to a tree may help to encode the region with the tree at least somewhat more efficiently. Of course, it may be advantageous to select the region in the reference image as a region that has as high textural similarity with the region to be encoded as possible, as the efficiency-increase of encoding the region may be expected to be maximized. However, as is important, perfect similarity is not required, and even a rather rough match may suffice to improve (en-)coding efficiency of the region to be encoded.

As another example of how to determine (e.g. decide) that the two regions are sufficiently texturally similar, the method 400 may optionally include, instead of or in addition to e.g. operation S420, an operation S430 that includes to consider the spatial and FOV relations between the cameras, as also described earlier herein. Phrased differently, in addition to, or instead of, performing image segmentation, it may be estimated (or e.g. "guessed") in what part of the reference image a region with similar image texture as the region to be encoded is likely to be found, based on knowledge of differences in e.g. position, orientation, zoom-level, and similar, between the cameras. For example, if there is a tree in one position of the image, whether to find the tree (or some other tree, or some other object texturally similar to a tree) in the reference image may be determined based on the knowledge about spatial and FOV relations between the cameras.

The method 400 further includes, as part of an operation S460, to encode the images as part of one or more encoded video streams, and to encode the region of one (e.g. first) of the images use the region of the other (e.g. second) image as a reference, e.g. by encoding the region of the first image using motion vectors pointing to the region of the second image.

As envisaged herein, the images may for example be encoded as part of a multilayer image stream, using any suitable multi-layered coding scheme. Examples include, but are not limited to, e.g. MPEG-5 Part 2/Low Complexity Enhancement Video Coding (LCEVC); Scalable Video Coding (SVC) AV1 (AV1-SVC); SVC extension of H.264/AVC, Scalable High Efficiency Video Coding (SVHC) extension of H.265/High Efficiency Video Coding (HEVC), and similar. If so doing, the image used as reference may for example be inserted in a base layer, and the other image may for example be inserted in an enhancement layer, referencing the base layer. Of course, when herein saying that one image references the other image to encode a particular region more efficiently, there may of course be other references as well. For example, if encoding a particular region of one image with reference to another, reference image, there may be the talked-about reference to the region of the reference image but also to e.g. one or more other reference images, either in a same or different layers. For example, if the image including the region to be encoded is placed in an enhancement layer, reference may also be made to one or more succeeding and/or preceding (in time) images also in the enhancement layer, and/or in one or more other enhancement/non-base layers, and/or to one or more succeeding and/or preceding images in the base layer. The reference to the reference image need not necessarily be to a reference image depicting a same time instance of the scene, i.e. the reference image may precede or succeed, or align with, the image including the region to be encoded in time. The image including the region to be encoded can be e.g. a predicted frame (P- or B-frame). For example, if using e.g. LCEVC coding, the reference frame may be encoded as part of the base layer, using any suitable (preferably hardware-based) codec (such as AVC, HEVC, VP9, AV1, EVC, VVC, and similar), and the image including the region to be encoded can be encoded using differences/residuals as part of a (lower-complexity) enhancement layer, and e.g. normative signaled up-sampling methods may be use to correct for artifacts produce by the base layer video codec and add detail and sharpness for the final output video. In other examples, the images may be encoded as part of a single layer, such as if using a single-layer coding architecture. If using a single layer only, suitable flags may be provided to indicate which images (or image frames) that originate from/are associated with which camera, and a decoder may be configured to sort out and display the images from each camera to create separate video feeds from the respective cameras, and similar.

As envisaged herein, the two images may be encoded as part of a same encoded video stream, such as part of e.g. a same multi-layered video stream or as part of a same single-layered video stream. In other examples, the images may be encoded as part of separate video streams, with the image including the region to be encoded then referencing the other video stream and the reference image and (reference) region found therein.

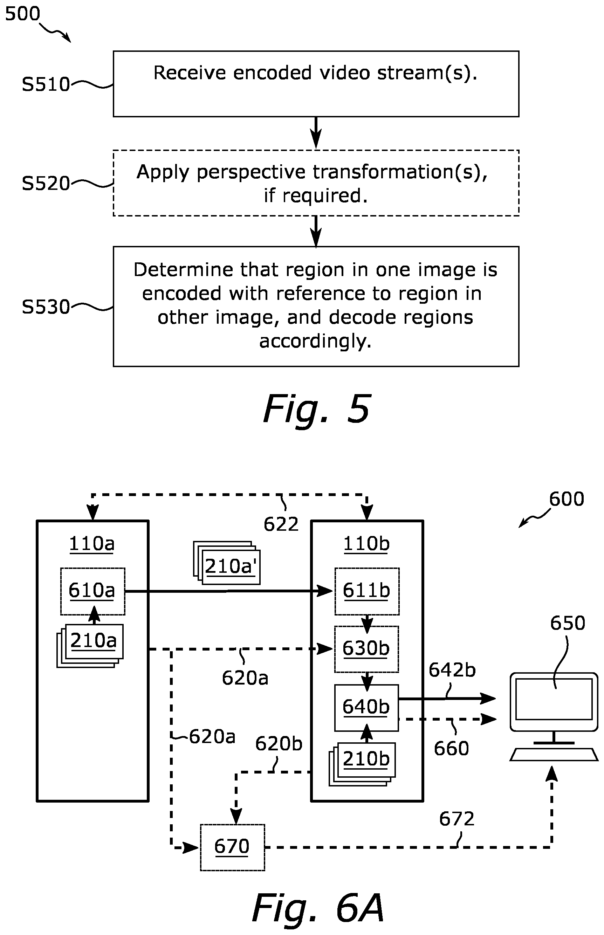

As mentioned earlier herein, in some examples, the method 400 may include, as part of an optional operation S450, to determine/obtain one or more perspective transformations/transforms, such as ${T}_{i , j}^{ab}$, that, when applied to the reference image, improves at least one of a spatial alignment and an orientation of the region of the reference frame that is to be used as reference with the region that is to be encoded with reference thereto. If using such one or more transformations, the reference to the reference image thus means a reference to the reference image after having been transformed accordingly. Phrased differently, in the envisaged method 400 in such an example, motion vector searching (if used) is thus performed on the transformed reference image, and the region of the (first) image is thus encoded with reference to the transformed reference image. In such an example, the transformed reference image thus becomes the "reference image". However, as the reference image is preferably encoded itself , as part of the one or more video streams, in an untransformed state (i.e. the transformation is only performed to encode the first image, and not to encode the reference, second image itself), information about such one or more transformations should be known to the decoder responsible for decoding the one or more encoded video streams, which will be described in more detail later with reference to e.g. Figure 5. The method 400 may for example, if necessary, include an operation in which information/data indicative of the one or more perspective transformations (such as ${T}_{i , j}^{ab}$) is provided via an interface accessible to a receive of the one or more decoded video streams, such as e.g. a client computer/server, receiver, decoder, and similar. In some embodiments of the method 400, information about the one or more (perspective) transformations is thus not provided as part of the one or more encoded video streams themselves, but need to be accessed separately in order to properly decode the one or more encoded video streams. For example, such data/information may be provided via an Application Programming Interface (API), such as for example the API "VAPIX" developed by the Applicant. As envisaged herein, it is assumed that such one or more perspective transformation are likely to remain static over time, and by avoiding to e.g. encode and/or provide them as part of the video stream itself, and by instead allowing to fetch them on a per-demand-basis from an interface, may reduce the amount of data transferred over a network interconnecting the cameras, and similar.

In the method 400, in some examples, what is the "first" image (i.e. the image including the region to be encoded) and the "second" image (i.e. the reference image to which reference is made when encoding the region of the first image) may be determined based on e.g. a pixel-density of the respective region. As used herein, "pixel-density" may refer to a number of pixels used to depict a particular object or region, or e.g. a particular part of an object or region, as indicated by e.g. pixels per area, dots per inch (DPI), or similar. Phrased differently, for overlapping regions, a "pixel-density" may be referred to as e.g. the total number of pixels used to depict the overlapping region. For non-overlapping regions, a "pixel-density" may be referred to as e.g. the number of pixels used to depict e.g. regions or objects a same physical size.

For example, if using e.g. a multi-layered coding scheme, the method 400 may include to select the first image as the image having higher pixel-density in its region, and to select the second image as the image having lower pixel-density in its region, after e.g. comparing (or already knowing) the pixel-densities of the two images.

Figure 5 schematically illustrates a flowchart of one or more examples of a method 500 as performed by e.g. a user client/decoder in order to decode one or more encoded video streams generated by method 400. The method 500 may for example be performed by processing circuitry of a decoder, or by a video processing server, or by any other computer-based entity responsible for decoding the one or more video streams.

The method 500 includes, as part of an operation S510, to obtain one or more video streams encoded using the method 400.

The method 500 further includes, as part of an operation S530, to determine that there is an image of the one or more video streams that includes at least one particular region that has been encoded with reference to another image of the one or more video streams, and to decode this at least one particular region using the other image as reference.

In some examples of the method 500, an optional operation S520 may include to determine that the at least one particular region has been encoded with reference to a (perspective) transformed version of the other image, and to obtain information/data indicative of the used perspective transformation(s), and to use this data to (perspective) transform the other image before using it as reference for decoding the one or more particular regions, i.e. before operation S530 of the method 500. Consequently, if operation S520 is performed, the "reference image" referred to in operation S530 is the (perspective) transformed reference image obtained directly by decoding the one or more video streams obtained in operation S510. Herein, why the one or more (perspective) transformations may be required before being able to correctly decode the one or more particular regions have already been described herein, and will not be repeated again when explaining the method 500.

As envisaged herein, for e.g. the decoder to know that there is a need to first transform the image used as a reference for decoding another image, there may be several options available. As one example, the transformed reference frame may be encoded as part of the encoded video stream, thus removing the need for determining whether transformation is required and/or to fetch information pertinent to how to perform such a transformation before being able to decode the video stream. As another, and "cheaper" example, the transform itself may be encoded as an extra frame with motion vectors, e.g. by use of auxiliary frames as disclosed in US 107 984 18 B2 by the same Applicant as for the present disclosure. As yet another, and more bitrate-efficient, example, a special/dedicated client software may be provided, that makes the necessary transformations and feeds the decoder with the correct data.

Figure 6A schematically illustrates various examples of a video camera system 600 as envisaged herein, including the camera 110a and the camera 110b. The camera 110a captures images 210a, using e.g. one or more image sensors (not shown) provided as part of the camera 110a. The camera 110 is configured to transfer the images 210a as images 210a' to the camera 110b. This either by sending the images 210 as raw-data (or perhaps after some preprocessing), or by first encoding the images 210a using a suitable codec, using a then provided encoder module 610a of the camera 110a to generate the images 210a', before sending the images 210a' to the camera 110b.

The camera 110b is configured to capture its own images 210b, of e.g. a same or different (part of a) scene as the camera 110a, using e.g. one or more image sensors (not shown) provided as part of the camera 110b. The camera 110b is further configured to receive the images 210a' from the camera 110a. If the images 210a' are encoded, the camera 110b may include a decoding module 611b in order to decode the received images 210a' (herein, such decoded images are still referred to as 210a', for what concerns the subsequent operations of the camera 110b).

The camera 110b is further configured to determine, using a determine module 640b, that in at least one image of either the images 210a' and 210b, there is at least one particular region that has an image texture that is similar to an image texture of one or more regions of at least one image of the other ones of images 210a' and 210b, i.e. as described earlier herein with reference to the method 400. In response to such determining, or e.g. by assuming that this is always the case, the camera 110b is further configured to encode the one or more particular regions of the at least one image of either images 210a' and 210b with reference to the one or more regions of the at least one image of the other ones of images 210a' and 210b, as part of encoding of one or more video streams 642b output from the camera 110b.

The determine module 640b may for example be configured to perform image segmentation or similar on the images 210a', 210b' to perform the determining, and/or base such a decision on information about the position, orientation, zoom-level (e.g. FOV) of each of cameras 110a and 110b, or at least on information indicative of relative differences in e.g. position, orientation, zoom-level (e.g. FOV) between the cameras 110a and 110b. For example, the camera 110a may provide information 620a indicative of its spatial and FOV information that may be received by camera 110b (that presumably already have such, internal information about itself). The internal information and the information 620a can then, in some examples, be used (e.g. by the module 640b) to determine that there are regions in the images 210a', 210b' that (presumably) have similar image textures, e.g. by assuming that a part of a scene depicted in one region in an image captured by one camera is likely to correspond to a part of a scene depicted in a region in an image captured by the other camera, and that the two regions therefore are likely to have textural similarity.

As another example, if it is deemed suitable/desirable to first perform one or more perspective transformations of the image that is to be used as reference (or at least of the region of the reference image to which reference will be made), the camera 110b may be configured to perform such transformations using e.g. a perspective transform module 630b. To gain knowledge about what transformation(s) to use, the camera 110b may be configured to use the data/information 620a together with its own internal such information, to determine what transformation(s) to apply to the reference image.

For example, the camera 110a may provide an API accessible from the camera 110b, through which data/information 620a may be provided to the camera 110b upon request from the latter, or the camera 110a may be configured to push such information to the camera 110b, either by its own decision or upon request/part of a subscription for such data from the camera 110b.

The camera 110b may also, if required, be configured to provide additional information 660 to e.g. a client 650 responsible for decoding the one or more encoded video streams 642b, indicative of e.g. whether the one or more perspective transformations (and e.g. data 620a) will be required to decode the video stream(s) 642b, and similar. Such additional information 660 may also, or in addition, indicate e.g. which of the images of the encoded video stream(s) 642b that correspond to which camera 110a, 110b, and similar. In other examples, such additional information 660 may instead, or in addition, be encoded/included as part of the video stream 642b, and similar. The information 660 may also, or in addition, include e.g. information corresponding to the data 620a received from the camera 110a and the internal such data of the camera 110b, or e.g. at least an indication of where the client 650 may turn to obtain such information, such as an addresses to an API or similar.

In some examples, there may be provided a separate interface module 670, such as an API module, through which e.g. the data 620a is made available to the camera 110b as part of data 672. The camera 110a may be configured to provide the information 620a to the interface module 670, e.g. on its own decision or upon request. The camera 110b may also be configured to provide its internal such data as data 620b sent to the interface module 670, e.g. on its own decision or upon request. The interface module 670 may be configured to provide the data 672 indicative of for example the perspective transformations that will be required in order to decode the video stream(s) 642b as described herein, or similar.

If indicated that there is a need to (perspective) transform the reference image (as encoded in the video stream 642b) before being able to decode the particular region with reference thereto, the camera 110b may be configured to access the data/information 620a either directly from the camera 110 or from e.g. the interface module 670, responsible for collecting the information (e.g. data/information 620a) from the camera 110a and/or from the camera 110b (e.g. as data/information 620b), and to provide such information (e.g. 672) to the client 650 upon request. In other examples, the client 650 may instead, or in addition, obtain the information corresponding to data 620a e.g. directly from the camera 110b, as part of e.g. information 660 and/or as part of the video stream 642b. For example, the client 650 may receive information about e.g. the FOV of the camera 110a via the interface module 670, and such information about the camera 110b directly from the camera 110b (e.g. as part of information 660), or e.g. receive such information for both cameras 110a and 110b from the interface module 670 as part of data 672.

It is further envisaged that in some examples, if required, the two cameras 110a and 110b may be configured to exchange as much information as is required to perform the method 400, as illustrated by the dashed arrow 622. The cameras 110a and 110b may for example be connected using a wire or wirelessly, and be configured to exchange data as required, e.g. by each exposing respective APIs/interfaces accessible by the other camera, and/or by each camera sending information to the other camera in a push-like fashion, or by a combination of both options. The cameras 110a and 110b may for example be configured to communicate via Bluetooth, WiFi, or via other proprietary or open protocols/standards for such communication. The cameras 110a and 110b may for example be configured to connect via wire, using e.g. Ethernet standards or similar open or proprietary protocols for wired communication. It is, of course, envisaged that, if necessary, each camera 110a and 110b includes the hardware and/or software required to enable such communication.

The cameras 110a and 110b may for example include processing circuitry configured to perform the various operations performed by each camera in order to perform the method 400.

In general, Figure 6A illustrates a group of one or more examples of a video system wherein one of the cameras receives images from another camera, and uses that information to encode one or more of its own images and to encode one or more of the images received from the other camera, to output one or more video streams that encode the output from both cameras, with the advantages as already described herein with reference to e.g. Figures 1, 2A-C, 3A, 3B, 4 and 5.

Figure 6A also serves to illustrate that it is, herein, envisaged to provide also the camera capable of performing method 400, such as camera 110b, on its own. Of course, what camera of e.g. the cameras 110a-c illustrated in Figure 1 that is selected as the "first camera" or the "second camera" may of course depend on the situation. Terms such as "first camera"/"first image" and "second camera"/"second image" are just labels used to indicate from which camera the image used as reference is selected, and from which camera the image on which the region is to be encoded using the "second image", is selected, respectively.

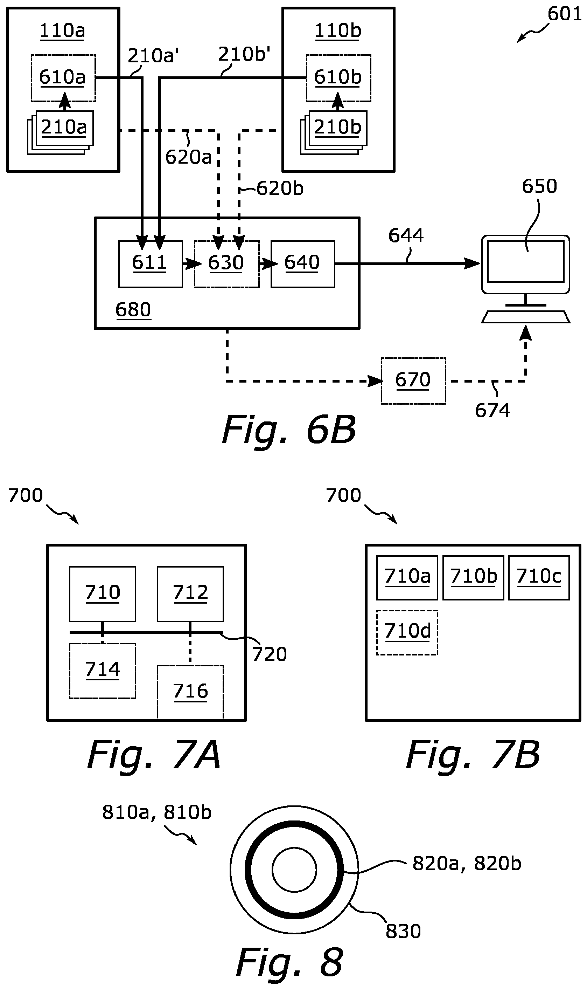

Figure 6B schematically illustrates one or more other examples of a video camera system 601 as envisaged herein. In contrast to the system 600 described with reference to Figure 6A, in the system 601, the responsibility of e.g. determining that there are matching/similar image textures in two regions, and to e.g. encode the images, is instead transferred from one of the cameras 110a and 110b to a centralized unit 680, such as e.g. a video processing/encoding server, or similar. In the system 601, each camera 110a and 110b sends its respective captured images 210a and 210b as images 210a' and 210b', respectively, to the unit 680. In some examples, the images 210a' and 210b' are raw/unencoded data, while in other examples at least one of the cameras 110a and 110b uses a corresponding encoding module 610a and 610b, respectively, to first encode the images before sending them to the unit 680.

The unit 680 includes a receive module 611 configured to receive the images 210a' and 210b' from the cameras 110a and 110b. The receive module 611 may, in some examples and if required, also provide functionality to decode one or more of the images 210a' and 210b' if they are encoded. As used herein, images 210a' and 210b' thus refers to images after they have been encoded, if necessary, i.e. to image data on which further analysis to detect texturally similar regions can be performed.

The unit 680 includes a determine module 640, that is configured to e.g. determine that there are regions of at least one image of each of images 210a' and 210b' that are texturally similar, just as described on multiple occasions already herein, and to e.g. decode at least one region of at least one image of either of 210a' and 210b' with reference to at least one region of at least one image of the other one of 210a' and 210b' as also described herein. The module 680 may thus also include functionality for encoding the one or more regions (that references the one or more other regions due to the textural similarity), to output the one or more encoded video streams 644, such that these can be received and decoded by e.g. the user client 650. The module 680 may, if required, include the means necessary for performing e.g. image segmentation and/or for considering the spatial and FOV relations (based on data 620a, 620b) of the camera 110a, 110b, as described herein.

In some examples, the module 680 further includes a transform module 630 for performing the one or more perspective transformations, based on e.g. the data 620a and 620b indicative of the spatial and FOV relations of the cameras 110a and 110b. The transform module 630 is thus configured to transform at least one image (or at least one region of the at least one image) of at least one of 210a' and 210'b, before transferring 210a' and 210b' on to the determine module 640. Of course, also in the example system 600, there may be the interface module 670 through which the client 650 may collect information 674 as required to e.g. perform the one or more perspective transformations to, if require, the reference image before being able to decode also the (region of the) image referencing the reference image. In general, Figures 6A and 6B serves to illustrate that as envisaged herein, the operations of determining and encoding may be performed either by one of the cameras, or by a centralized functionality (such as module 680) not part of any of the cameras.

Even more generally herein, exactly in what particular entity e.g. the method 400 is performed is not critical, and the method 400 may for example be performed jointly by a plurality of entities in a distributed fashion, such as jointly by multiple cameras and/or by one or more cameras and a centralized server (such as unit 680), or similar. Of course, a "centralized server" may also include e.g. a cloud-based service with which the cameras may communicate, e.g. wirelessly or through one or more interfaces to which the cameras are connected wired and/or wirelessly.

Generally herein, it is to be noted that the two cameras, such as 110a and 110b, referred to when describing e.g. the method 400, may also form part of e.g. a same multi-direction camera and/or dual-channel traffic camera. For example, one camera may be a fisheye camera configured to obtain a broader perspective of a scene, while the other camera may be a PTZ camera configured to provide a narrower/zoomable perspective of the same or some other scene. Even though two such cameras may be housed together in a same housing, and provided/marketed as a single, multi-view camera or similar, such an example would also fall within the scope of the present disclosure and the accompanying claims. For what concerns the present disclosure, it is sufficient that the images are captured using different cameras, e.g. using different image sensors, and similar, to allow for a system-wide perspective when encoding and not just considering each image from each camera individually. Phrased differently, the envisaged solution is applicable both to multi-view cameras, and for physically separate cameras arranged at physically different locations (i.e. not co-located and/or within a same housing), such as on different buildings, walls, light posts, and similar.

Figure 7A schematically illustrates one or more examples of a device 700 for performing the method 400 of encoding images captured by separate video cameras as envisaged herein. The device 700 may for example be a video camera (such as a monitoring camera), or e.g. some other device external to such a camera but capable of obtaining images captured by the camera. As envisaged herein, a "device 700" may also be a collection of multiple devices, such as various entities of a video camera system, such as a plurality of video cameras and/or centralized server, configured to jointly perform the method 400. In what follows, the device 700 will be described as being only a single device, but what is stated herein may of course be generalized also to a plurality of devices, e.g. by replacing processing circuitry (singular) with processing circuitry (plural), memory with memories, interface with interfaces, and similar.

The device 700 includes at least a processor (or "processing circuitry") 710 and optionally a memory 712. As used herein, a "processor" or "processing circuitry" may for example be any combination of one or more of a suitable central processing unit (CPU), multiprocessor, microcontroller (µC), digital signal processor (DSP), application-specific integrated circuit (ASIC), field-programmable gate-array (FPGA), graphics processing unit (GPU), etc., capable of executing software instructions stored in the memory 712. The memory 712 may be external to the processor 710, or may be internal to the processor 710. As used herein, a "memory" may be any combination of random-access memory (RAM) and read-only memory (ROM), or any other kind of memory capable of storing the instructions. The memory 712 contains (i.e. stores) instructions that, when executed by the processor 710, cause the device 700 to perform a method as described herein (i.e. the method 400 or any embodiments thereof). The device 700 may further include one or more additional items 714 which may, in some situations, be useful for performing the method. In case the device 700 is a camera, the additional item(s) 714 may then include e.g. an image sensor and for example one or more lenses for focusing light from a scene on the image sensor, such that the camera may capture images of a scene as part of performing the envisaged method. The camera may be a video camera, configured to capture a stream of images. The additional item(s) 714 may also include e.g. various other electronics components needed for capturing the scene, e.g. to properly operate the image sensor and/or lenses as desired. Performing the method in a monitoring camera may be useful in that the processing is moved to "the edge", i.e. closer to where the actual scene is captured compared to if performing e.g. image analysis somewhere else (such as at a more centralized processing server or similar).

The device 700 may for example be connected to a network such that the results from performing the method 400 may be transmitted to e.g. a user/operator, and/or to another device such as a server, or similar. For this purpose, the device 700 may include a network interface 716, which may be e.g. a wireless network interface (as defined in e.g. any of the IEEE 802.11 or subsequent standards, supporting e.g. Wi-Fi) or a wired network interface (as defined in e.g. any of the IEEE 802.3 or subsequent standards, supporting e.g. Ethernet). The network interface 716 may for example also support any other wireless standard capable of transferring encoded video, such as e.g. Bluetooth or similar. The various components 710, 712, 714 and 716 (if present) may be connected via one or more communication buses 720, such that these components may communicate with each other, and exchange data as required.

The device 700 may for example be a monitoring camera mounted or mountable on a building or other support structure, e.g. in form of a PTZ-camera or e.g. a fisheye-camera capable of providing a wider perspective of the scene, or any other type of monitoring/surveillance camera. Other examples include the device 700 being a dashcam-camera for a vehicle, a body-worn camera for a human or animal, a drone camera, and similar cameras for non-stationary objects. In any such examples of the device 700, it is envisaged that the device 700 may include all necessary components (if any) other than those already explained herein required to perform the method 400 as envisaged herein. The various components of the device 400 may in some examples be further configured to implement the method operations as described herein (such at least S410, S240, S460). As mentioned above, in other examples, the device 700 may be distributed across multiple physical and/or logical entities, to form e.g. a computer system, video camera system, or similar, wherein two or more of the operations (and/or two or more different suboperations of a same operation) may be performed on/by different physical and/or logical entities, e.g. as part of a distributed computing process or similar.

Figure 7B schematically illustrates one or more embodiments of the device 700 in terms of a number of functional/computing blocks 710a, 710b, and 710c. Each such block 710a-c is responsible for performing a functionality in accordance with a particular operation of the method 400, as shown in the flowchart of Figure 4. For example, one such functional block 710a may be configured obtain/receive the images from the separate cameras (as in operation S410). The block 710a may be referred to as an image obtaining block/module, and similar. Another block 710b may be configured to determine (as in operation S440) the textural similarity between the regions. The block 710b may be referred to as a (textural similarity) determining block/module, and similar. Another block 710c may be configured to encode (as in operation S460) the images as part of the one or more encoded video streams, including to encode the region of one image with reference to the texturally similar region of the other, reference image. The block 710c may be referred to as e.g. an encoding block/module, an encoder, or similar. The device 700 may optionally include e.g. one or more additional function blocks, such as one or more blocks 710d, such as e.g. a block for encoding its captured images before sending them to e.g. another camera or a centralized unit (such as unit 680), for decoding images received from the other camera, for performing image segmentation (operation S420), for considering spatial and FOV relations between cameras (operation S430), for determining perspective transformations (operation S450), and/or similar to provide/perform any operation of the method 400 as envisaged herein but not already covered by any of the blocks 710a-c.

In general terms, each functional block 710a-d may be implemented in hardware or in software. Preferably, one or more or all functional blocks 710a-d may be implemented by the processing circuitry 710, possibly in cooperation with the storage medium/memory 712 and/or the communications interface 716. The processing circuitry 710 may thus be arranged to from the memory 712 fetch instructions as provided by a functional block 710a-d, and to execute these instructions and thereby perform any operations of the method 400 or any embodiment thereof performed by/in the device 110b/700 as disclosed herein.

Likewise, the device 700 or a device including similar hardware components, may instead be configured to perform the method 500 in a distributed fashion such as illustrated by the video camera system 601 described with reference to Figure 6B. For example, the device 700 may then be configured to implement the functionality of at least the centralized module 680, i.e. to receive images from the cameras 110a, 110b, to determine that there are regions of textural similarity, and to encode one region with reference to the other as described herein already. This by corresponding configuration of the processing circuitry 710, memory 712, and/or e.g. additional entities 714 and communications interface 716.

Of course, there may also be provided a device for decoding the encoded one or more video streams generated by method 400, such as for performing method 500. Such a device, although not illustrated in any drawing, may include processing circuitry, memory, a communications interface, and/or one or more other entities as required to perform method 500.

Figure 8 schematically illustrates examples of computer program products 810a and 810b including a computer-readable means/storage medium 830. On the computer storage medium 830, at least one of a computer program 820a and 820b (including computer code) can be stored, which computer program 820a and 820b can cause (when the code is executed) the processor 710 and thereto operatively coupled entities and devices, such as the communications interface 716 and the memory 712, of the device 700 to execute method 400. The computer program 820a and/or computer program product 810a may thus provide means for performing any operations of the method 400 (or any embodiment thereof) performed jointly in a video camera system (such as 601), and the computer program 820b and/or computer program product 810b may provide means for performing any operations of the method 400 (or any embodiment thereof) performed in a single video camera (such as the camera 110b illustrated in Figure 6A).

In the example(s) of Figure 8, the computer program products 810a, 810b and computer-readable storage medium 830 are illustrated as an optical disc, such as a CD (compact disc) or a DVD (digital versatile disc) or a Blu-Ray disc. The computer program products 810a, 810b and computer-readable storage medium 830 could also be embodied as one or more memories, such as one or more of a random-access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory or a Flash memory, such as a compact Flash memory. Thus, while the computer program(s) 820a, 820b are here schematically shown as a track on the depicted optical disk, the computer program(s) 820a, 820b may be stored in any way which is suitable for the computer program product(s) 810a, 810b and computer-readable storage medium 830. The storage medium 830 may be non-transitory or transitory.

In summary of all of the above, the present disclosure improves upon contemporary technology in that it provides an improved way of encoding images captured by separate video cameras, wherein it is taken into account whether there are regions of the images captured by separate cameras that are texturally similar, and benefits from the realization that one such region may then be encoded with reference to the other. Such a system-wide perspective enables to e.g. increase the encoding efficiency of at least one of such regions, and to e.g. save bitrate by encoding from the system-wide perspective and not only from the individual perspective of each camera. This may be particular beneficial as resolutions of cameras increase and there is a need to limit computational complexity, a number of bits for storing of the video streams as well as a bitrate to transfer the video streams.

Although features and elements may be described above in particular combinations, each feature or element may be used alone without the other features and elements or in various combinations with or without other features and elements. Additionally, variations to the disclosed embodiments may be understood and effected by the skilled person in practicing the claimed invention, from a study of the drawings, the disclosure, and the appended claims.

In the claims, the words "comprising" and "including" does not exclude other elements, and the indefinite article "a" or "an" does not exclude a plurality. The mere fact that certain features are recited in mutually different dependent claims does not indicate that a combination of these features cannot be used to advantage.

### List of reference numerals

- 100: example setup/scene including separate cameras
- 110a-c: video cameras
- 120a-c: camera FOVs
- 210a-c: images captured by separate cameras
- 220a,b: regions with similar image textures
- 230a-c, 231c: regions with similar image textures
- 240a-c, 241a: regions with similar image textures
- 250a-c: regions with similar image textures
- 300,301: perspective transformations
- 400: method flowchart
- S410-S460: operations of method 400
- 500: method flowchart
- S510-530: operations of method 500
- 600, 601: video camera system
- 610a,b: encoding modules
- 611 (b): decoding module
- 620a,b: spatial and FOV data
- 622: data exchange between cameras
- 630 (b): perspective transform module
- 640 (b): textural similarity determining module
- 642, 644: encoded video stream(s)
- 650: user client
- 660: additional information/data
- 670: interface module
- 672, 674: data obtained from interface module
- 680: centralized unit
- 700: device
- 710, 710a-d: processing circuitry, functional blocks entities
- 712, 714, 716: memory, additional entities, communications interface
- 810a,b; 820a,b;: computer program product(s); computer program(s)
- 830: computer-readable storage medium

## Claims

1. A computer-implemented method for encoding of images captured by separate video cameras, comprising:
- receiving a respective image from each of two separate video cameras;
- determining that, according to at least one condition, a region of one of the images has an image texture similar to a region of the other image, and
- encoding the images as part of one or more encoded video streams, wherein encoding of the region of a first image of the images comprises using the region of the other, second image of the images as a reference.

2. The method of claim 1, wherein said determining comprises performing image segmentation on each one of the images, and wherein the at least one condition comprises that said image segmentation indicates that both regions belong to a same class.

3. The method of claim 1 or 2, wherein the method further comprises obtaining spatial and field-of-view, FOV, relations between the two cameras, and wherein the at least one condition comprises that said spatial and FOV relations indicate that both regions correspond to a same part of a scene captured by the two cameras.

4. The method of any one of claims 1 to 3, wherein the method further comprises obtaining a perspective transformation that, when applied to the second image, improves at least one of a spatial alignment and an orientation of the region of the second image with the region of the first image, and wherein the reference is to the second image transformed by said perspective transformation.

5. The method of claim 4, wherein the method further comprises providing data indicative of the perspective transformation via an interface accessible to a receiver of the one or more encoded video streams, such as at least one of a client, receiver and decoder.

6. The method of any one of the preceding claims, wherein the method further comprises selecting, out of the images, the first image as the image having a higher pixel-density in its region and the second image as the image having a lower pixel-density in its region.

7. The method of any one of the preceding claims, wherein the method comprises encoding both images as part of a same, multi-layered video stream.

8. The method of claim 7, wherein the method comprises encoding the second image in a base layer of the video stream and the first image in an enhancement layer of the video stream.

9. The method of any one of the preceding claims, wherein fields-of-view, FOVs, of the two cameras do not overlap.

10. A computer-implemented method for encoding of an image captured by a video camera, the method performed by a video camera, the method comprising:
- obtaining a respective image from each of the video camera and another camera;
- determining that, according to at least one condition, a region of one of the images has an image texture similar to a region of the other image, and
- encoding the images as part of one or more encoded video streams, wherein encoding of the region of a first image of the images comprises using the region of the other, second image of the images as a reference.

11. A video camera system, comprising:
- two separate video cameras, and
- processing circuitry configured to:
-- receive a respective image from each of the two separate video cameras;
-- determine that, according to at least one condition, a region of one of the images has an image texture similar to a region of the other image, and
**--** encode the images as part of one or more encoded video streams,
wherein encoding of the region of a first image of the images comprises using the region of the other, second image of the images as a reference.

12. A video camera, comprising:
- at least one image sensor for capturing an image;
- an interface for receiving another image from another camera, and
- processing circuitry configured to:
-- obtain the image and the other image from the at least one image sensor and other camera, respectively;
-- determine that, according to at least one condition, a region of one of the images has an image texture similar to a region of the other image, and
**--** encode the images as part of one or more encoded video streams,
wherein encoding of the region of a first image of the images comprises using the region of the other, second image of the images as a reference.

13. A computer program comprising instructions that, when executed by processing circuitry of a video camera system comprising two separate video cameras, causes the video camera system to:
- receive a respective image from each of the two separate video cameras;
- determine that, according to at least one condition, a region of one of the images has an image texture similar to a region of the other image, and
- encode the images as part of one or more encoded video streams, wherein encoding of the region of a first image of the images comprises using the region of the other, second image of the images as a reference.

14. A computer program comprising instructions that, when executed by processing circuitry of a video camera, cause the video camera to:
- obtain an image captured by at least one image sensor of the camera and another image captured by another camera;
- determine that, according to at least one condition, a region of one of the images has an image texture similar to a region of the other image, and
- encode the images as part of one or more encoded video streams, wherein encoding of the region of a first image of the images comprises using the region of the other, second image of the images as a reference.

15. A computer program product comprising a computer-readable storage medium storing the computer program of at least one of claim 13 and 14**.**

## Amended claims

### Amended claims in accordance with Rule 137(2) EPC.

1. A computer-implemented method (400) for encoding of images captured by separate video cameras, comprising:
- receiving (S410) a respective image (210a, 210b) from each of two separate video cameras (110a, 110b);
- determining (S440) that a region (220a) of one of the images has an image texture similar to that of a region (220b) of the other image, and
- encoding (S460) the images as part of one or more encoded video streams, wherein encoding of the region of a first image of the images comprises using the region of the other, second image of the images as a reference.

2. The method of claim 1, wherein said determining comprises performing (S420) image segmentation on each one of the images, and confirming that said image segmentation indicates that both regions belong to a same class.

3. The method of claim 1 or 2, wherein the method further comprises obtaining spatial and field-of-view, FOV, relations between the two cameras, wherein said spatial and FOV relations include knowledge about one or more differences in physical position, physical orientation, zoom-level, images sensor properties and/or lens arrangement properties between the two cameras, and wherein said determining comprises confirming (S430) that said spatial and FOV relations indicate that both regions correspond to a same part of a scene captured by the two cameras.

4. The method of any one of claims 1 to 3, wherein the method further comprises obtaining (S450) a perspective transformation that, when applied to the second image, improves at least one of a spatial alignment and an orientation of the region of the second image with the region of the first image, and wherein the reference is to the second image transformed by said perspective transformation.

5. The method of claim 4, wherein the method further comprises providing data indicative of the perspective transformation via an interface accessible to a receiver of the one or more encoded video streams, such as at least one of a client, receiver and decoder.

6. The method of any one of the preceding claims, wherein the method further comprises selecting, out of the images, the first image as the image having a higher pixel-density in its region and the second image as the image having a lower pixel-density in its region.

7. The method of any one of the preceding claims, wherein the method comprises encoding both images as part of a same, multi-layered video stream.

8. The method of claim 7, wherein the method comprises encoding the second image in a base layer of the video stream and the first image in an enhancement layer of the video stream.

9. The method of any one of claims 1, 2, 4, 5, 6, 7, and 8, and not depending on claim 3, , wherein fields-of-view, FOVs, of the two cameras do not overlap.

10. A computer-implemented method (400) for encoding of an image captured by a video camera, the method performed by a video camera, the method comprising:
- obtaining (S410) a respective image from each of the video camera and another camera;
- determining (S440) that a region of one of the images has an image texture similar to a region of the other image, and
- encoding (S460) the images as part of one or more encoded video streams, wherein encoding of the region of a first image of the images comprises using the region of the other, second image of the images as a reference.

11. A video camera system (600, 601), comprising:
- two separate video cameras (110a, 110b), and
- processing circuitry configured to:
-- receive a respective image (210a, 210b) from each of the two separate video cameras;
-- determine that a region (220a/220b) of one of the images has an image texture similar to a region (220b/220a) of the other image, and
-- encode the images as part of one or more encoded video streams (642b, 644), wherein encoding of the region of a first image of the images comprises using the region of the other, second image of the images as a reference.

12. A video camera (110b), comprising:
- at least one image sensor for capturing an image (210b);
- an interface for receiving another image (210a) from another camera (110a), and
- processing circuitry configured to:
-- obtain the image and the other image from the at least one image sensor and other camera, respectively;
-- determine that a region of one of the images has an image texture similar to a region of the other image, and
-- encode the images as part of one or more encoded video streams (642b), wherein encoding of the region of a first image of the images comprises using the region of the other, second image of the images as a reference.

13. A computer program (820a) comprising instructions that, when executed by processing circuitry of a video camera system comprising two separate video cameras, causes the video camera system to:
- receive a respective image from each of the two separate video cameras;
- determine that a region of one of the images has an image texture similar to a region of the other image, and
- encode the images as part of one or more encoded video streams, wherein encoding of the region of a first image of the images comprises using the region of the other, second image of the images as a reference.

14. A computer program (820b) comprising instructions that, when executed by processing circuitry of a video camera, cause the video camera to:
- obtain an image captured by at least one image sensor of the camera and another image captured by another camera;
- determine that a region of one of the images has an image texture similar to a region of the other image, and
- encode the images as part of one or more encoded video streams, wherein encoding of the region of a first image of the images comprises using the region of the other, second image of the images as a reference.

15. A computer program product (810a, 810b) comprising a computer-readable storage medium (830) storing the computer program (820a, 820b) of at least one of claim 13 and 14.
